(19) **Europäisches Patentamt / European Patent Office / Office européen des brevets**

(11) **EP 3 764 531 B1**

(12) # FASCICULE DE BREVET EUROPEEN

(45) Date de publication et mention de la délivrance du brevet:
**03.09.2025 Bulletin 2025/36**

(21) Numéro de dépôt: **20184631.8**

(22) Date de dépôt: **08.07.2020**

(51) Classification Internationale des Brevets (IPC):
**H02M 3/335** (2006.01)  **B60L 15/00** (2006.01)
**B60L 50/53** (2019.01)  **H02M 1/00** (2006.01)

(52) Classification Coopérative des Brevets (CPC):
**B60L 15/007; B60L 50/53; H02M 3/33561; H02M 3/33573; H02M 3/33584;** B60L 2200/26; B60L 2210/12; B60L 2240/529; H02M 1/0009; H02M 1/0058; Y02T 10/64; Y02T 10/70; Y02T 10/72

(54) **CONVERTISSEUR POUR UN VÉHICULE FERROVIAIRE, VÉHICULE FERROVIAIRE ET PROCÉDÉ ASSOCIÉS**

WECHSELRICHTER FÜR EIN SCHIENENFAHRZEUG, SCHIENENFAHRZEUG UND ENTSPRECHENDES VERFAHREN

CONVERTER FOR A RAILWAY VEHICLE, ASSOCIATED RAILWAY VEHICLE AND METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.07.2019 FR 1907679**

(43) Date de publication de la demande:
**13.01.2021 Bulletin 2021/02**

(73) Titulaire: **ALSTOM Holdings**
**93400 Saint-Ouen-sur-Seine (FR)**

(72) Inventeurs:
• **SCOTTINI, Jonathan**
**B-1070 Anderlecht (BE)**
• **BOU SAADA, Johnny**
**B-1330 Rixensart (BE)**
• **WEYTENS, Michel**
**B-1420 Braine L'Alleud (BE)**
• **MASSELUS, Jean-Emmanuel**
**B-6032 Mont-Sur-Marchienne (BE)**

(74) Mandataire: **Plasseraud IP**
**104 Rue de Richelieu**
**CS92104**
**75080 Paris Cedex 02 (FR)**

(56) Documents cités:
**EP-A1- 3 244 525      EP-A1- 3 308 996**
**WO-A1-2018/116431    US-A1- 2015 229 225**
**US-B2- 9 270 189**

• **WENZHENG XU ET AL: "A New Control Method for a Bi-Directional Phase-Shift-Controlled DC-DC Converter with an Extended Load Range", ENERGIES, vol. 10, no. 10, 10 October 2017 (2017-10-10), pages 1532, XP055668092, DOI: 10.3390/en10101532**
• **WU HONGFEI ET AL: "A Family of Soft-Switching DC-DC Converters Based on a Phase-Shift-Controlled Active Boost Recti", IEEE TRANSACTIONS ON POWER ELECTRONICS, INSTITUTE OF ELECTRICAL AND ELECTRONICS ENGINEERS, USA, vol. 30, no. 2, 1 February 2015 (2015-02-01), pages 657 - 667, XP011560814, ISSN: 0885-8993, [retrieved on 20141007], DOI: 10.1109/TPEL.2014.2308278**
• **WUHUA LI ET AL: "Secondary-Side Phase-Shift-Controlled ZVS DC/DC Converter With Wide Voltage Gain for High Input Voltage Applications", IEEE TRANSACTIONS ON POWER ELECTRONICS, INSTITUTE OF ELECTRICAL AND ELECTRONICS ENGINEERS, USA, vol. 28, no. 11, 1 November 2013 (2013-11-01), pages 5128 - 5139, XP011507713, ISSN: 0885-8993, DOI: 10.1109/TPEL.2013.2242490**

EP 3 764 531 B1

• DUDRIK JAROSLAV ET AL: "Zero-Voltage and Zero-Current Switching PWM DC-DC Converter Using Controlled Secondary Rectifier With One Active Switch and Nondissipative Turn-Off Snubber", IEEE TRANSACTIONS ON POWER ELECTRONICS, INSTITUTE OF ELECTRICAL AND ELECTRONICS ENGINEERS, USA, vol. 33, no. 7, 1 July 2018 (2018-07-01), pages 6012 - 6023, XP011679846, ISSN: 0885-8993, [retrieved on 20180319], DOI: 10.1109/TPEL.2017.2748569

## Description

La présente invention concerne un convertisseur pour un véhicule ferroviaire.

La présente invention concerne également un véhicule ferroviaire et un procédé associé.

Des convertisseurs sont utilisés dans les véhicules ferroviaires pour convertir de l'énergie électrique d'un premier niveau à un deuxième niveau de tension. Par exemple, des convertisseurs auxiliaires sont utilisés pour convertir de l'énergie électrique pour des charges auxiliaires du véhicule ferroviaire, telles que le chauffage et/ou la climatisation, la ventilation, l'éclairage ou des compresseurs. De tels convertisseurs comprennent un transformateur qui fournit une isolation galvanique entre une alimentation haute tension d'une ligne ferroviaire et une ligne d'alimentation de tension inférieure du véhicule ferroviaire. L'alimentation haute tension est par exemple une caténaire, un troisième rail ou une liaison de traction. La ligne d'alimentation du véhicule ferroviaire est, par exemple, une ligne d'alimentation auxiliaire à moyenne tension (typiquement 3x400V à 50Hz).

L'article de Wenzheng Xu et al. intitulé « A New Control Method for a Bi-Directional Phase-Shift-Controlled DC-DC Converter with an Extended Load Range » décrit un exemple d'un procédé de contrôle pour un convertisseur bidirectionnel.

On connaît l'article de DUDRIK JAROSLAV ET AL intitulé "Zero-Voltage and Zero-Current Switching PWM DC-DC Converter Using Controlled Secondary Rectifier With One Active Switch and Non-dissipative Turn-Off Snubber". On connaît également EP3244525 et US 2015/229225.

Afin de réduire la taille et le poids des convertisseurs, il est connu d'utiliser un dispositif de conversion courant continu / courant continu (CC / CC), par exemple, à l'intérieur du convertisseur auxiliaire. Un tel dispositif de conversion CC / CC comprend une pluralité d'éléments de commutation comprenant des dispositifs semi-conducteurs tels que des transistors.

Notamment, l'augmentation de la fréquence du transformateur permet de réduire sa taille. Or, l'augmentation de la fréquence du transformateur implique d'augmenter la fréquence de commutation des éléments de commutation du dispositif de conversion CC / CC.

Cependant, lorsque les éléments de commutation commutent, le convertisseur subit une perte d'énergie électrique, notamment sous la forme d'une dissipation d'énergie électrique en énergie thermique. Ainsi, lorsque la fréquence de commutation des éléments de commutation est augmentée, l'énergie dissipée augmente également. Une telle perte d'énergie conduit, d'une part, à un besoin augmenté en énergie et, d'autre part, à un échauffement non souhaité du convertisseur.

Pour réduire les pertes d'énergie lors de la commutation, il est connu d'utiliser des techniques dites de « commutation douce » (également appelées « soft switching » en anglais). Pour une commutation dite douce, le convertisseur comprend notamment un circuit de résonance propre à absorber une partie de l'énergie présente dans le convertisseur lors de la commutation. Cependant, de telles techniques de commutation douce introduisent des pertes additionnelles dans le transformateur. En outre, du fait de l'ajout du circuit de résonance, le volume et le poids du convertisseur est augmenté.

Ainsi, un but de l'invention est de proposer un convertisseur de taille réduite, tout en minimisant les pertes d'énergie dans le convertisseur.

Pour cela, la présente description porte sur un convertisseur selon la revendication 1.

Suivant des modes de réalisation particuliers, le convertisseur est selon l'une quelconque des revendications 2 à 7.

La présente description se rapporte également à un véhicule ferroviaire selon la revendication 8.

La présente description se rapporte, en outre, à un procédé de conversion d'énergie selon la revendication 9.

D'autres caractéristiques et avantages de l'invention apparaîtront à la lecture de la description qui suit de modes de réalisation de l'invention, donnés à titre d'exemple uniquement et en référence aux dessins qui sont :

- figure 1, une représentation schématique d'un convertisseur selon l'invention, et
- figure 2, un graphique représentant l'évolution de courants et de tensions au sein du convertisseur de la figure 1.

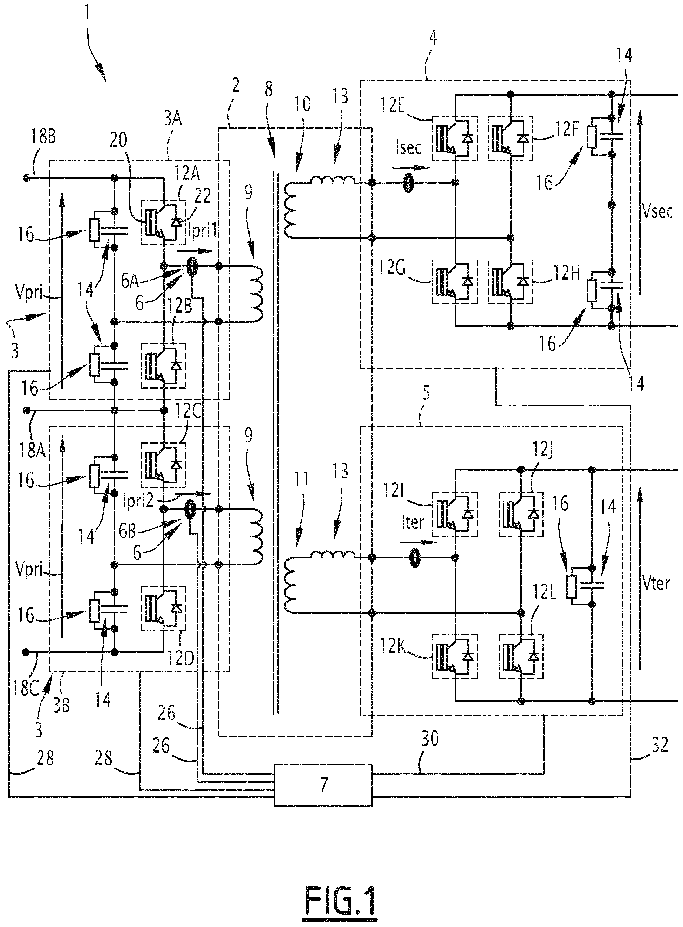

Sur la figure 1 est représenté un convertisseur 1 pour un véhicule ferroviaire.

Le convertisseur 1 comprend un transformateur 2, au moins un étage primaire de conversion 3, au moins un étage secondaire de conversion 4, optionnellement au moins un étage tertiaire de conversion 5, au moins un capteur de courant 6 et au moins un contrôleur 7.

Le transformateur 2 du convertisseur 1 comprend un circuit magnétisant, également appelé noyau magnétique 8, au moins un enroulement primaire 9 connecté à l'étage primaire 3 et au moins un enroulement secondaire 10 connecté à l'étage secondaire 4, et optionnellement un enroulement tertiaire 11 connecté à l'étage tertiaire 5.

Le transformateur 2 présente des inductances de fuite 13. Les inductances de fuite 13 correspondent à des imperfections de couplage entre les différents enroulements elles sont responsables de la transmission d'énergie par les enroulements 9, 10, 11 et le noyau magnétique 8. L'inductance de fuite 13 est par exemple légèrement différente d'un étage 3, 4, 5 à l'autre. Dans l'exemple de la figure 1, des inductances de fuites 13 sont représentés pour l'étage secondaire 4 et l'étage tertiaire 5.

De préférence, le noyau magnétique 8 est dépourvu d'entrefer (ou « air gap » en anglais). L'entrefer est une coupure dans un circuit magnétique.

Le convertisseur 1 est configuré pour transmettre de l'énergie électrique par un champ électromagnétique entre l'étage primaire 3 et l'étage secondaire 4, au travers de l'enroulement primaire 9, du noyau magnétique 8 et de l'enroulement secondaire 10. L'étage primaire 3 est de préférence relié à une alimentation électrique (non représentée) et l'étage secondaire 4 est de préférence relié à une ou plusieurs charges électriques (non représentées).

Le convertisseur 1 est par exemple un convertisseur auxiliaire configuré pour alimenter une ligne d'alimentation auxiliaire du véhicule ferroviaire, notamment des charges autres que le ou les moteurs de traction du véhicule ferroviaire. Par exemple, le convertisseur auxiliaire est configuré pour alimenter électriquement le chauffage et/ou la climatisation, la ventilation, l'éclairage ou des compresseurs du véhicule ferroviaire.

Dans l'exemple de la figure 1, le convertisseur 1 comprend deux étages primaires 3A et 3B, ayant de préférence une architecture identique. Selon une variante, le primaire est construit autour d'un seul étage. Pour simplifier la présente description, les deux étages primaires 3A et 3B sont dénommés étage primaire 3 dans ce qui suit. En outre, dans l'exemple de la figure 1, le convertisseur 1 comprend un seul étage secondaire 4 et un seul étage tertiaire 5.

Le convertisseur 1 comprenant l'étage primaire 3 et l'étage secondaire 4 est également appelé convertisseur de double pont actif (ou en anglais « dual active bridge converter »).

Selon un mode de réalisation non représenté, le convertisseur 1 comprend au moins deux étages secondaires 4.

Le convertisseur 1 est configuré pour transmettre de l'énergie électrique entre l'étage primaire 3 et l'étage secondaire 4 (et lorsqu'il existe l'étage tertiaire 5) pour la transformation d'un premier courant Ipri sous une première tension Vpri reçu à l'étage primaire 3, en un deuxième courant Isec sous une deuxième tension Vsec fourni à l'étage secondaire 4, et lorsqu'il existe l'étage tertiaire 5, en un troisième courant Iter sous une troisième tension Vter. Comme visible sur l'exemple de la figure 1, la première tension Vpri de l'étage primaire 3A est la tension entre une borne intermédiaire 18A des étages primaires 3A, 3A et une borne supérieure 18B. Selon l'exemple de la figure, la première tension Vpri de l'étage primaire 3B est la tension entre une borne inférieure 18C et la borne intermédiaire 18A.

Le convertisseur 1 est configuré pour transmettre de l'énergie électrique du premier courant Ipri1 de l'étage primaire 3A et du premier courant Ipri2 de l'étage primaire 3B à l'étage secondaire 4 et inversement. De préférence, dans l'exemple illustré par la figure 1, le premier courant Ipri1 de l'étage primaire 3A est égal au premier courant Ipri2 de l'étage primaire 3B.

Notamment, le convertisseur 1 est configuré pour transmettre de l'énergie électrique par induction entre l'étage primaire 3 (et en particulier les étages primaire 3A et 3B) et l'étage secondaire 4, via le transformateur 2.

De préférence, le convertisseur 1 est un convertisseur bidirectionnel. Par « convertisseur bidirectionnel », il est entendu un convertisseur qui est configuré pour transformer de l'énergie électrique depuis l'étage primaire 3 vers l'étage secondaire 4, et qui est, en outre, configuré pour transformer de l'énergie électrique depuis l'étage secondaire 4 vers l'étage primaire 3.

Selon un mode de réalisation particulier, le convertisseur 1 est également configuré pour transformer de l'énergie électrique depuis l'étage primaire 3 vers l'étage tertiaire 5 et vice-versa.

Selon un mode de réalisation alternatif, le convertisseur 1 est un convertisseur unidirectionnel. Selon ce mode de réalisation, le convertisseur est uniquement configuré pour transmettre de l'énergie électrique selon un sens prédéterminé, de préférence depuis l'étage primaire 3 vers l'étage secondaire 4, et éventuellement vers l'étage tertiaire 5.

L'étage primaire 3, l'étage secondaire 4 et éventuellement l'étage tertiaire 5 comprennent chacun au moins deux éléments de commutation 12 et au moins un condensateur 14.

En référence à l'exemple de la figure 1, l'étage primaire 3A comprend les éléments de commutation 12A et 12B, l'étage primaire 3B comprend les éléments de commutation 12C et 12D. Selon l'exemple, l'étage secondaire 4 comprend les éléments de commutation 12E, 12F, 12G et 12H et l'étage tertiaire 5 comprend les éléments de commutation 12I, 12J, 12K et 12L.

L'étage primaire 3 est connecté à l'au moins un enroulement primaire 9. Dans l'exemple de figure 1, chaque étage primaire 3 comprend deux éléments de commutation 12 reliés en série entre eux et deux condensateurs 14, chaque condensateur 14 étant associé à un élément de commutation 12 correspondant. Les condensateurs 14 sont par exemple connectés entre eux en série, parallèlement aux éléments de commutation 12.

Chaque condensateur 14 est, par exemple, doté d'une résistance 16 connecté parallèlement au condensateur 14. Chaque résistance 16 est, par exemple, configurée pour décharger le condensateur 14 associé lors d'une mise hors tension, par exemple pour des raisons de sécurité.

L'étage secondaire 4 est connecté à l'au moins un enroulement secondaire 10. L'étage secondaire 4 comprend, par exemple, quatre éléments de commutation 12 électriquement reliés entre eux et deux condensateurs 14, dotés chacun d'une résistance 16 connectée parallèlement aux condensateurs 14. Les éléments de commutation 12 sont disposés en deux paires, chaque paire comprenant deux éléments de commutation 12 reliés en série. Les paires d'éléments de commutation 12 sont connectées parallèlement entre elles et par exemple parallèlement aux condensateurs 14. Les paires d'éléments de commutation 12 sont configurées pour former un circuit de type quatre quadrants. L'étage secondaire 4, illustré sur la figure 1, présente notamment une configuration de quatre quadrants.

L'étage tertiaire 5 est un étage optionnel du convertisseur 1. L'étage tertiaire 5 est de préférence relié à au moins une charge électrique (non représentée) ou à un dispositif de stockage d'énergie, notamment une batterie. Selon un exemple préféré, la puissance transmise à la charge électrique est sensiblement inférieure à la puissance transmise à la charge de l'étage secondaire 4. Par exemple, la puissance transmise par l'étage tertiaire 5 est sensiblement égale à 20 kW, et la puissance transmise par l'étage secondaire 4 est sensiblement égale à 120 kW.

L'étage tertiaire 5 comprend par exemple quatre éléments de commutation 12 électriquement reliés entre eux et au moins un condensateur 14 doté d'une résistance 16 connectée parallèlement au condensateur 14. Les éléments de commutation 12 sont notamment disposés en deux paires, chaque paire comprenant deux éléments de commutation 12 reliés en série. Les paires d'éléments de commutation 12 sont notamment connectées parallèlement entre elles et par exemple parallèlement aux condensateurs 14. L'étage tertiaire 5, illustré sur la figure 1, présente notamment une configuration de quatre quadrants.

L'étage tertiaire 5 est connecté à l'au moins un enroulement tertiaire 11 du transformateur 2 configuré pour échanger de l'énergie électrique avec l'enroulement primaire 9 par induction.

Selon un mode de réalisation particulier, l'étage tertiaire 5 présente une architecture identique à l'étage secondaire 4.

Chaque élément de commutation 12 est par exemple formé d'un transistor 20 et d'une diode 22 connectée en antiparallèle du transistor 20. Le transistor 20 est par exemple un transistor bipolaire à grille isolée, également appelé IGBT (de l'anglais *Insulated Gate Bipolar Transistor).*

Pour des raisons de visibilité, les références du transistor 20 et de la diode 22 sont représentées uniquement pour l'élément de commutation 12A de la figure 1. Les éléments de commutation 12 sont de préférence identiques les uns par rapport aux autres.

Chaque élément de commutation 12 est propre à commuter à des instants de commutation entre un état fermé et un état ouvert.

Par « état fermé », il est entendu que l'élément de commutation 12 est configuré pour laisser passer un courant à travers l'élément de commutation 12. Par « état ouvert », il est entendu que l'élément de commutation 12 est configuré pour bloquer le passage d'un courant à travers l'élément de commutation 12.

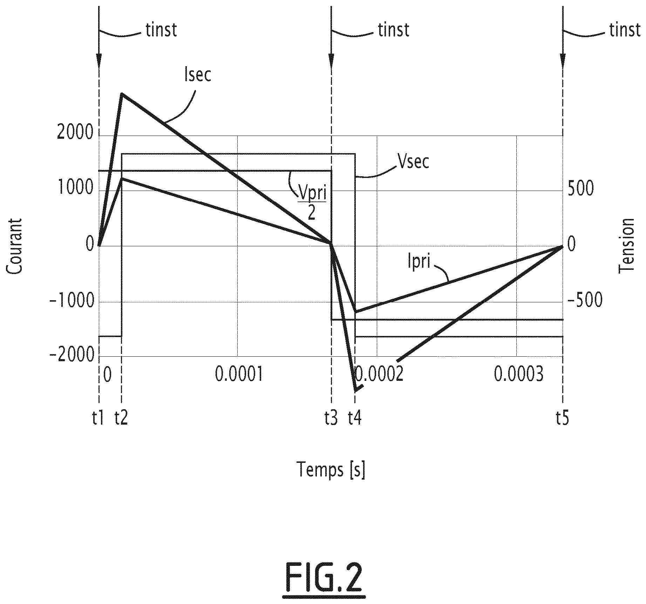

Dans l'exemple illustré sur la figure 1, lorsque les éléments de commutation 12A et 12C sont dans un état fermé, les éléments de commutation 12B et 12D sont dans un état ouvert (voir, par exemple, la période entre l'instant t1 et t3 sur la figure 2). La tension aux bornes de l'enroulement 9 présente une valeur positive, telle que Vpri/2, c'est-à-dire égale à la moitié de la première tension Vpri.

Dans cet exemple, lorsque les éléments de commutation 12A et 12C sont dans un état ouvert, les éléments de commutation 12B et 12D sont dans un état fermé (voir, par exemple, la période entre l'instant t3 et t5 sur la figure 2). La tension aux bornes de l'enroulement 9 présente une valeur négative, telle que -Vpri/2.

Dans cet exemple, lorsque les éléments de commutation 12E et 12H sont dans un état fermé, les éléments de commutation 12F et 12G sont dans un état ouvert (voir, par exemple, la période entre l'instant t2 et l'instant t4 sur la figure 2). La tension aux bornes de l'enroulement 10 présente une valeur positive, telle que Vsec.

Dans cet exemple, lorsque les éléments de commutation 12E et 12H sont dans un état ouvert, les éléments de commutation 12F et 12G sont dans un état fermé (voir, par exemple, la période entre l'instant t4 et au moins l'instant t5 sur la figure 2).

Par des changements des instants d'ouverture et de fermeture des éléments de commutation 12, notamment le déphasage de la deuxième tension Vsec par rapport à la première tension Vpri est modifiée.

Le capteur de courant 6 est configuré pour mesurer un courant et pour transmettre une mesure de courant.

Selon le mode de réalisation représenté sur la figure 1, le convertisseur 1 comprend deux capteurs de courant 6. Dans ce mode de réalisation, chaque capteur de courant 6 est configuré pour mesurer le premier courant Ipri circulant dans l'étage primaire 3 correspondant. Par exemple, le capteur de courant 6A est configuré pour mesurer le courant circulant dans l'étage primaire 3A, notamment dans l'enroulement 9 de l'étage primaire 3A. Le capteur de courant 6B est, par exemple, configuré pour mesurer le courant circulant dans l'étage primaire 3B, notamment dans l'enroulement 9 de l'étage primaire 3B.

Selon un mode de réalisation alternatif, non représenté, le convertisseur 1 comprend un seul capteur de courant 6 configuré pour mesurer le premier courant Ipri.

Selon un mode de réalisation, le convertisseur 1 comprend, en outre, un capteur additionnel de courant configuré pour mesurer le deuxième courant Isec. Le capteur de courant additionnel est notamment configuré pour mesurer le deuxième courant Isec pour permettre une protection contre un court-circuit à l'intérieur de l'étage secondaire 4. Par exemple, le contrôleur 7 est configuré pour prendre en compte la mesure du capteur de courant additionnel pour détecter un tel court-circuit.

Selon un mode de réalisation particulier, au moins un étage parmi l'étage primaire 3, l'étage secondaire 4 et l'étage tertiaire 5 comprend au moins deux capteurs de courant 6. Par exemple, le capteur de courant 6 est configuré pour mesurer le courant entre les éléments de commutation 12 de l'étage primaire 3 et l'enroulement primaire 9, et un autre capteur de courant est configuré pour mesurer le courant entre les éléments de commutation 12 de l'étage primaire 3 et l'alimentation électrique, ou entre l'étage secondaire 4 ou tertiaire et la charge connectée à l'étage correspondant.

Par exemple, les étages 3, 4 et 5 sont disposés à l'intérieur d'un boîtier et le contrôleur 7 est disposé à l'extérieur de ce boîtier.

Le contrôleur 7 est par exemple connecté au capteur de courant 6 par une connexion 26 dédiée pour recevoir la mesure du courant du capteur de courant 6. Le contrôleur 7 est, en outre, par exemple connecté à l'étage primaire 3 par une connexion 28, à l'étage secondaire 4 par une connexion 30 et, selon un exemple, à l'étage tertiaire 5 par une connexion 32 de sorte à envoyer des commandes de commutation aux éléments de commutation 12 des étages 3, 4, 5.

Le contrôleur 7, est par exemple un ordinateur. Par exemple, le contrôleur 7 comporte une unité de traitement de données formée par exemple d'une mémoire associée à un processeur. Dans la mémoire est par exemple enregistré un logiciel exécutable par un processeur.

En variante ou en complément, le logiciel du contrôleur 7 se présente au moins partiellement sous la forme d'un dispositif physique, tel que par exemple un circuit logique programmable, tel qu'un FPGA (de l'anglais *Field Programmable Gate Array*), ou encore sous la forme d'un circuit intégré dédié, tel qu'un ASIC (de l'anglais *Application Specific Integrated Circuit).*

Le contrôleur 7 est configuré pour recevoir une ou plusieurs mesures du ou des capteurs de courant 6, 6A, 6B et pour calculer les instants de commutation des éléments de commutation 12. De préférence, le contrôleur 7 est configuré pour calculer les instants de commutation des éléments de commutation 12 de l'étage secondaire 4, et optionnellement de l'étage tertiaire 5 en fonction de la mesure du premier courant Ipri. Le contrôleur 7 est ainsi configuré pour modifier le déphasage de la deuxième tension Vsec par rapport à la première tension Vpri ce qui permet de modifier l'amplitude du premier courant Ipri. Par amplitude du courant, il est entendu l'intensité du courant.

Le contrôleur 7 est configuré pour déterminer les instants de commutation des éléments de commutation 12 de sorte à induire un déphasage spécifique permettant d'obtenir que le premier courant Ipri soit sensiblement égal à zéro lors de l'instant de commutation tinst des éléments de commutation 12 de l'étage primaire 3, comme décrit en détail ci-après.

Le contrôleur 7 est notamment configuré pour garantir la commutation des éléments de commutation 12 de l'étage primaire 3 lorsque le courant Ipri est sensiblement nul, par envoi de commandes aux éléments de commutation 12 de l'étage secondaire 4 afin de faire varier le déphasage entre les tensions Vsec et Vpri. En d'autres termes, le contrôleur 7 est configuré pour que la commutation des éléments de commutation 12 de l'étage primaire 3 intervienne lorsque la transmission d'énergie électrique entre l'étage primaire 3 et l'étage secondaire 4, et éventuellement l'étage tertiaire 5, est sensiblement nulle. Le contrôleur 7 est notamment configurer pour envoyer les commandes par les connexions 28, 30, 32.

Par « sensiblement nul », il est entendu une amplitude de courant inférieure à 2% par rapport à une amplitude maximale du courant présent lors d'une transmission d'énergie, de préférence inférieure à 0,1%, et encore plus préférablement inférieure à 0,01%. Typiquement, par « courant sensiblement nul », il est entendu un courant n'excédant pas 5 Ampère lors d'un courant maximal de 200 Ampère, de préférence un courant n'excédant pas 2 Ampère lors d'un courant maximal de 200 Ampère.

Selon un exemple, le contrôleur 7 est configuré pour décaler dans le temps uniquement les instants de commutation des éléments de commutation 12 E à 12 H de l'étage secondaire 4, et optionnellement des éléments de commutation 12 I à 12L de l'étage tertiaire 5. Notamment, selon cet exemple, le contrôleur 7 est configuré pour ne pas décaler dans le temps les instants de commutation les éléments de commutation 12A à 12D de l'étage primaire 3.

Les condensateurs 14 de chaque étage 3, 4, 5 sont susceptibles d'être chargés et déchargés au cours du temps. La vitesse du chargement et déchargement dépend par exemple de l'alimentation électrique et des charges électriques. La vitesse de chargement et déchargement est susceptible de varier au cours du temps. Le contrôleur 7 prend notamment en compte de telles variations de chargement et déchargement par la mesure du courant pour déterminer l'instant de commutation de chaque élément de commutation 12.

Le premier courant Ipri dépend des valeurs de tension des condensateurs 14 de l'étage primaire 3 par rapport à la tension des condensateurs 14 de l'étage secondaire 4. Notamment, le premier courant Ipri est proportionnel à la différence entre la première tension Vpri et la deuxième tension Vsec multipliée par un rapport de transformation du transformateur 2. Plus cette différence est grande, plus le premier courant Ipri est grand.

Par exemple, du fait que les enroulements 9, 10, 11 du transformateur 2 présentent des inductances de fuite 13 différentes, les condensateurs 14 sont susceptibles de charger et de décharger de l'énergie électrique à une vitesse différente l'une à l'autre. Par la mesure du courant, le contrôleur 7 est apte à prendre en compte ces différences et commuter les éléments de commutation 12 de l'étage primaire 3 lorsque le premier courant Ipri est sensiblement nul.

Le contrôleur 7 est, en outre, configuré pour estimer, en fonction de la mesure du premier courant Ipri, un instant prochain, lors duquel le premier courant mesuré est sensiblement nul. Le contrôleur 7 est ainsi configuré pour déterminer les instants de commutation des éléments de commutation 12 de l'étage secondaire 4 notamment en fonction de l'estimation pour que le premier courant soit égal à zéro à l'instant de commutation tinst des éléments de commutation 12 de l'étage primaire 3.

Par exemple, en référence à la figure 2, si le premier courant Ipri est supérieur à 0 à l'instant t1, le contrôleur 7 est configuré pour diminuer la période de temps entre les instants de commutation des éléments de commutation 12 de l'étage primaire (instant t1) respectivement secondaire (instant t2). Le contrôleur 7 est ainsi configuré pour modifier les instants de commutation des éléments de commutation 12 de l'étage secondaire 4 pour modifier le déphasage entre Vsec et Vpri et assurer que le courant Ipri soit nul à l'instant t3 de commutation des éléments de commutation 12 de l'étage primaire 3. Par exemple, le contrôleur 7 est configuré pour envoyer des commandes aux éléments de commutation 12E et 12H pour les passer dans un état fermé, et aux éléments de commutation 12F et 12G pour les passer dans un état ouvert à un nouvel instant t2 plus proche de t1 qu'initialement configuré, ce qui permet de modifier la pente du premier courant Ipri et d'obtenir que le premier courant Ipri soit égal à zéro à l'instant de commutation tinst prochain des éléments de commutation 12 de l'étage primaire 3.

Le contrôleur 7 est notamment configuré pour définir les instants de commutation des éléments de commutation 12 de sorte à modifier le déphasage de la première tension Vpri par rapport à la deuxième tension Vsec en fonction du courant mesuré. En particulier, le contrôleur 7 est configuré pour commuter les éléments de commutation 12 de l'étage primaire 3 avec une différence de temps par rapport aux éléments de commutation 12 de l'étage secondaire 4.

Avantageusement, le contrôleur 7 est propre à commander les instants de commutation (ouverture/fermeture) des éléments de commutation 12 de l'étage primaire 3 de sorte que lesdits instants sont fixes (c'est-à-dire que la période entre deux instants de commutation successifs est fixe) et les instants de commutation des éléments de commutation 12 de l'étage secondaire 4 de sorte que lesdits instants sont propres à varier (c'est-à-dire que la période entre deux instants de commutation successifs est variable). Un tel fonctionnement permet de régler le déphasage de la deuxième tension Vsec par rapport à la première tension Vpri.

Dans l'exemple de la figure 2, les instants de commutation de l'étage primaire 3 sont dénommés des instants de commutation tinst et correspondent à des instants de commutation de référence prédéterminés.

Avantageusement, le contrôleur 7 est configuré pour commander la commutation des éléments de commutation 12 de l'étage primaire 3 aux instants de référence prédéterminés et pour déterminer des instants de commutation des éléments de commutation 12 de l'étage secondaire 4 en fonction de la mesure du premier courant Ipri, de manière à ce que le premier courant Ipri soit sensiblement nul aux instants de référence prédéterminés.

Par exemple, dans l'exemple de la figure 2, la deuxième tension Vsec est décalée en phase par rapport à la première tension Vpri entre les instants t1 et t2, c'est-à-dire l'instant dans lequel la deuxième tension Vsec change d'une tension négative à une tension positive (instant t2) est décalé par rapport à l'instant t1. Le contrôleur 7 est ainsi configuré pour envoyer des commandes de manière à obtenir un déphasage entre la première et la deuxième tension Vpri, Vsec ce qui permet d'obtenir que le premier courant Ipri soit sensiblement égal à zéro à l'instant de commutation tinst. En d'autres termes, le contrôleur 7 est configuré pour décaler les instants t2 et t4 vers des nouveaux instants t2 et t4 en envoyant des commandes des commutation aux éléments de commutation 12 de l'étage secondaire 4 au moment de ces nouveaux instants t2, t4.

Le principe de la différence de phase (ou « phase shift » en anglais), est par exemple décrit par l'article de Zhao, B. et al. intitulé « Overview of Dual-Active-Bridge Isolated Bidirectional DC-DC Converter for High-Frequency-Link Power-Conversion System », IEEE Transactions on power electronics, Vol. 29, No. 8, August 2014.

De préférence, le contrôleur 7 est configuré pour contrôler la première tension Vpri et la deuxième tension Vsec selon le principe de contrôle de déphasage unique (ou « Single Phase Shift Control » en anglais ») décrit par l'article précédent. Selon ce principe, le rapport de déphasage entre la tension Vpri de l'étage primaire 3 et la tension Vsec de l'étage secondaire 4 est modifié pour contrôler la transmission d'énergie électrique entre l'étage primaire 3 et l'étage secondaire 4 (et éventuellement l'étage tertiaire 5).

Le contrôleur 7 comprend par exemple une boucle de régulation du déphasage et donc de l'instant de commutation des éléments de commutation 12 de l'étage secondaire 4, en fonction de la mesure du courant Ipri au cours du temps et des instants de commutation de référence, c'est-à-dire des instants de commutation tinst des éléments de commutation 12 de l'étage primaire 3. La boucle de régulation est configurée de sorte que Ipri soit sensiblement nul aux instants de commutation.

En particulier, le contrôleur 7 est configuré pour déterminer les instants de commutation des éléments de commutation 12 de sorte que l'amplitude du premier courant correspondant au courant mesuré, notamment du premier courant Ipri, soit modifiée, tout en conservant une forme prédéfinie. De préférence, l'amplitude du premier courant Ipri présente une forme sensiblement triangulaire, comme représenté sur la figure 2. La forme triangulaire permet notamment d'obtenir un courant nul lors des commutations (pour la minimisation des pertes par commutation).

De préférence, le contrôleur 7 est configuré pour contrôler ou empêcher la saturation du convertisseur 1. Typiquement, le transformateur 2 sature si la

valeur absolue de l'intégrale de l'amplitude du courant Ipri entre un premier instant de commutation de référence (tel que t1) et un deuxième instant de commutation de référence (tel que t3) consécutifs est différente de la valeur absolue de l'intégrale de l'amplitude du courant entre le deuxième instant de commutation de référence (tel que t3) et un troisième instants de commutation de référence (tel que t5) consécutifs. En d'autres termes, l'aire sous la courbe représentant l'amplitude du premier courant Ipri lorsqu'il est positif (par exemple entre les instants t1 et t3) est sensiblement égale à l'aire sous la courbe représentant l'amplitude du premier courant Ipri lorsqu'il est négatif (par exemple entre les instants t3 et t5) pour empêcher une saturation.

Le fonctionnement du convertisseur 1 va être décrit notamment en référence à la figure 2 représentant un graphique donnant une évolution de courants et de tensions au sein du convertisseur 1.

Le convertisseur 1 met en œuvre un procédé de conversion d'énergie. Notamment, le capteur de courant 6 mesure le premier courant Ipri. Le contrôleur 7 détermine les instants de commutation des éléments de commutation 12 et notamment des éléments de commutation 12 de l'étage secondaire 4 en fonction de la mesure du premier courant Ipri, de manière à commuter les éléments de commutation 12 de l'étage primaire 3 lorsque le premier courant est sensiblement nul.

De préférence, le convertisseur 1 fonctionne à une fréquence fixe. Par la fréquence du convertisseur 1, il est entendu la fréquence d'interruption de transmission d'énergie entre l'étage primaire 3 et l'étage secondaire 4.

La fréquence est notamment égale à $\frac{1}{2\,tinst}$. Typiquement, la fréquence est comprise entre 500 Hz et 6 kHz, de préférence sensiblement égale à 3 kHz. La fréquence est, par exemple, prédéterminée selon l'application. En outre, la fréquence choisie dépend d'éventuelles pertes électriques des éléments de commutation 12.

Sur la figure 2, une graphique illustre l'évolution au cours du temps du premier courant Ipri, du deuxième courant Isec, de la première tension Vpri et de la deuxième tension Vsec.

La première tension Vpri de l'étage primaire 3 est alternativement positive ou négative en fonction des commutations des éléments de commutation 12 de l'étage primaire 3, et change de signe à chaque instant de commutation tinst des éléments de commutation 12 de l'étage primaire 3. La deuxième tension Vsec est décalé en phase par rapport à la première tension Vpri. La deuxième tension Vsec est alternativement positive ou négative en fonction des commutations des éléments de commutation 12 de l'étage secondaire 4.

Le premier courant Ipri et le deuxième courant Isec présentent chacun un extremum juste après chaque instant de commutation tinst des éléments de commutation 12 de l'étage primaire 3, par exemple aux instants t2 et t4 de la figure 2.

Par exemple entre les instants t1 et t2 ainsi qu'entre les instants t3 et t4, la valeur absolue de l'amplitude du premier courant Ipri présente une pente croissante. La valeur de la pente croissante est modifiée lorsque le déphasage de la deuxième tension Vsec par rapport à la première tension Vpri est modifiée par la commutation des éléments de commutation 12.

L'amplitude de chaque courant Ipri, Isec est atténuée de préférence linéairement après l'instant t2 et t4, notamment par une transmission d'énergie électrique entre l'étage primaire 3 et l'étage secondaire 4, et est sensiblement égale à zéro à chaque instant de commutation de référence.

Le contrôleur 7 est configuré de sorte que la valeur absolue de l'intégral de l'amplitude du courant mesuré entre deux phases de transmission d'énergie consécutives est constante.

La phase de transmission d'énergie est l'intervalle entre deux instants de commutation de référence consécutifs.

La puissance P transmise dans le convertisseur 1 est déterminée par l'équation suivante:

$$P = Ipri \cdot Venr.pri,$$

- avec le premier courant Ipri, et
- une tension Venr.pri présente à l'enroulement primaire 9.

Ainsi, la puissance $\Delta P$ transmise entre deux instants de commutation de référence consécutifs est donnée par l'équation suivante :

$$\Delta P = \frac{1}{\Delta t} \int Ipri \cdot Venr.pri\, dt,$$

avec $\Delta t$ la durée de temps entre deux instants de commutation de référence.

Selon un exemple illustré sur la figure 2, l'intégrale du premier courant entre t1 et t3 est comparée par le contrôleur 7 à l'intégrale de la valeur absolue du premier courant entre t3 et t5. Si le contrôleur 7 détermine que la différence calculée est une valeur positive, le contrôleur 7 modifie la deuxième tension Vsec en la rendant négative plus tôt lors d'une prochaine période (une période étant comprise entre t1 et t5). En conséquence, la différence calculée est, lors de la prochaine période, sensiblement zéro. Le contrôleur 7 empêche ainsi une saturation.

L'homme du métier comprendra que des combinaisons des modes de réalisation et des variantes précédemment décrites peuvent être envisagées.

La présente invention présente plusieurs avantages.

Le fait que le convertisseur 1 comprend au moins un capteur de courant 6 et un contrôleur 7 configuré pour déterminer les instants de commutation des éléments de commutation 12 en fonction de la mesure de courant, de manière à commuter les éléments de commutation 12 de l'étage primaire 3 lorsque le courant mesuré est sensiblement nul, permet d'augmenter la vitesse de commutation du convertisseur 1, tout en présentant des pertes électriques minimales.

En effet, même lors de vitesses de commutation élevées, les pertes électriques sont faibles, car la mesure du courant permet au contrôleur 7 de commuter les éléments de commutation 12 de l'étage primaire 3 lorsque le courant mesuré est sensiblement nul. Les pertes électriques étant proportionnelles au produit du courant et de la tension lors de l'interruption, les pertes sont faibles lorsque le courant est faible, et de préférence sensiblement nul.

Le fait que le contrôleur 7 prenne en compte la mesure de courant permet notamment de déterminer la puissance électrique transmise $\Delta P$ de manière précise. En particulier, la mesure du courant est plus précise qu'une mesure de tension traditionnellement effectuée dans les convertisseurs. En effet, les mesures traditionnelles de tension sont intégrées et divisées par une valeur d'inductance de fuite 13, ce qui conduit souvent à des erreurs.

Le fait de mesurer un courant permet, en outre, au noyau magnétique 8 du transformateur 2 d'être dépourvu d'entrefer ou d'avoir un entrefer minimisé, alors que dans les convertisseurs classiques, un entrefer permet d'éviter une saturation du convertisseur, notamment lorsque l'énergie transmise n'est pas égale entre plusieurs instants globaux de commutation tinst. Or, la mesure de courant permet d'ajuster l'amplitude du courant de manière précise, notamment par des commandes émises par le contrôleur 7, avant que le convertisseur soit saturé. Ainsi, par la mesure du courant, les éléments de commutation 12 peuvent précisément être commandés notamment en fonction de la charge électrique. Ainsi, avantageusement aucun entrefer n'est présent (ou un entrefer minimisé est présent) dans le noyau magnétique 8 du transformateur 2.

Le fait de commuter les éléments de commutation 12 de l'étage primaire 3 lorsque le premier courant Ipri est sensiblement nul, permet de minimiser les pertes électriques. En effet, les pertes électriques sur l'étape primaire 3 sont plus élevées que sur l'étage secondaire 4 lorsque le courant respectif n'est pas nul, notamment à cause des caractéristiques des éléments de commutation correspondants.

En outre, aucun circuit de résonance n'est requis dans le convertisseur 1 du fait de la mesure de courant. En effet, dans les convertisseurs traditionnels, des circuits de résonance sont utilisés pour absorber de l'énergie lors de l'interruption de la transmission de l'énergie.

Le fait que le convertisseur 1 comprend, selon un mode de réalisation préféré, au moins deux étages primaires 3 permet de réduire la taille des éléments de commutation 12, notamment des transistors 20, tout un garantissant une transmission suffisante d'énergie électrique entre l'étage primaire 3 et l'étage secondaire 4 (et éventuellement l'étage tertiaire 5). Du fait que des transistors sont plus petits, les pertes électriques sont en outre réduites, et permettent en même temps notamment l'utilisation d'une tension élevée en entrée de l'étage primaire 3.

**Revendications**

1. Convertisseur (1) pour un véhicule ferroviaire comprenant :

   - au moins un étage primaire (3) de conversion, et au moins un étage secondaire (4) de conversion, l'étage primaire (3) et l'étage secondaire (4) comprenant chacun des éléments de commutation (12) ;
   - un transformateur (2) configuré pour transmettre de l'énergie entre l'étage primaire (3) et l'étage secondaire (4) pour la transformation d'un premier courant (Ipri) sous une première tension (Vpri) reçu à l'étage primaire (3), en un deuxième courant (Isec) sous une deuxième tension (Vsec) fourni à l'étage secondaire (4),

   **caractérisé en ce que** le convertisseur (1) comprend en outre :

   - au moins un capteur de courant (6), le capteur de courant (6) étant configuré pour mesurer au moins le premier courant (Ipri), et
   - un contrôleur (7) configuré pour déterminer des instants de commutation des éléments de commutation (12) en fonction de la mesure du premier courant (Ipri) effectuée par le capteur de courant (6), de manière à commander la commutation des éléments de commutation (12) de l'étage primaire (3) lorsque le premier courant (Ipri) est sensiblement nul, le contrôleur (7) étant configuré pour commander la commutation des éléments de commutation (12) de l'étage primaire (3) à des instants de référence prédéterminés et pour déterminer des instants de commutation des éléments de commutation (12) de l'étage secondaire (4) en fonction de la mesure du premier courant, de manière à ce que le premier courant soit sensiblement nul aux instants de référence prédéterminés, le contrôleur (7) étant configuré pour contrôler la première tension (Vpri) et la deuxième tension (Vsec) selon le principe de contrôle de déphasage unique, les enroulements (9, 10, 11) du transformateur (2) présentant des inductances de fuite (13) différentes.

2. Convertisseur (1) selon la revendication 1, dans lequel le contrôleur (7) est configuré pour déterminer les instants de commutation des éléments de commutation (12) de sorte que l'amplitude du premier courant (Ipri) soit modifiée tout en conservant une forme prédéfinie, avantageusement une forme sensiblement triangulaire.

3. Convertisseur (1) selon l'une quelconque des revendications précédentes, dans lequel le contrôleur (7) est configuré pour déterminer les instants de commutation des éléments de commutation (12) de sorte à modifier le déphasage de la deuxième tension (Vsec) par rapport à la première tension (Vpri), en fonction de la mesure du premier courant (Ipri).

4. Convertisseur (1) selon la revendication 3, dans lequel la valeur absolue de l'amplitude du premier courant (Ipri) présente une pente croissante, la valeur de la pente croissante étant modifiée lorsque le déphasage de la deuxième tension (Vsec) par rapport à la première tension (Vpri) est modifiée par la commutation des éléments de commutation (12).

5. Convertisseur (1) selon l'une quelconque des revendications précédentes, dans lequel le contrôleur (7) est configuré pour déterminer les instants de commutation des éléments de commutation (12) permettant de modifier l'amplitude du premier courant (Ipri) de sorte que la valeur absolue de l'intégral de l'amplitude du premier courant entre deux phases de transmission d'énergie consécutives est constante.

6. Convertisseur (1) selon l'une quelconque des revendications précédentes, dans lequel le transformateur (2) comprend un noyau magnétique (8) dépourvu d'entrefer.

7. Convertisseur (1) selon l'une quelconque des revendications précédentes, dans lequel l'étage primaire (3) et l'étage secondaire (4) comprennent chacun au moins un premier et un deuxième élément de commutation (12) en série, le premier élément de commutation étant ouvert lorsque le deuxième élément de commutation est fermé et inversement.

8. Véhicule ferroviaire comprenant un convertisseur (1) selon l'une quelconque des revendications précédentes.

9. Procédé de conversion d'énergie mis en œuvre par un convertisseur (1) pour un véhicule ferroviaire, le convertisseur comprenant au moins un étage primaire (3) de conversion, et au moins un étage secondaire (4) de conversion, l'étage primaire (3) et l'étage secondaire (4) comprenant chacun des éléments de commutation (12), le convertisseur comprenant en outre un transformateur (2) configuré pour transmettre de l'énergie entre l'étage primaire (3) et l'étage secondaire (4) pour la transformation d'un premier courant (Ipri) sous une première tension (Vpri) reçu à l'étage primaire (3), en un deuxième courant (Isec) sous une deuxième tension (Vsec) fourni à l'étage secondaire (4),

caractérisé en ce que le convertisseur (1) comprend en outre au moins un capteur de courant (6) et un contrôleur (7), et en ce que le procédé de conversion comprend :

- une étape de mesure par le capteur de courant (6) au moins du premier courant (Ipri), et
- une étape de détermination, par le contrôleur (7), des instants de commutation des éléments de commutation (12) en fonction de la mesure du premier courant (Ipri), de manière à commander la commutation des éléments de commutation (12) de l'étage primaire (3) lorsque le premier courant (Ipri) est sensiblement nul,

le contrôleur (7) commandant la commutation des éléments de commutation (12) de l'étage primaire (3) à des instants de référence prédéterminés et détermine des instants de commutation des éléments de commutation (12) de l'étage secondaire (4) en fonction de la mesure du premier courant, de manière à ce que le premier courant soit sensiblement nul aux instants de référence prédéterminés, le contrôleur (7) contrôlant la première tension (Vpri) et la deuxième tension (Vsec) selon le principe de contrôle de déphasage unique
les enroulements (9, 10, 11) du transformateur (2) présentant des inductances de fuite (13) différentes.

**Patentansprüche**

1. Wandler (1) für ein Schienenfahrzeug, umfassend:

- wenigstens eine Primärwandlerstufe (3) und wenigstens eine Sekundärwandlerstufe (4), wobei die Primärwandlerstufe (3) und die Sekundärwandlerstufe (4) jeweils Schaltelemente (12) umfassen;
- einen Transformator (2), der so ausgebildet ist, dass er Energie zwischen der Primärstufe (3) und der Sekundärstufe (4) überträgt, um einen ersten Strom (Ipri) mit einer ersten Spannung (Vpri), der in der Primärstufe (3) empfangen wird, in einen zweiten Strom (Isec) unter einer zweiten Spannung (Vsec) umzuwandeln, der der Sekundärstufe (4) zugeführt wird,

**dadurch gekennzeichnet, dass** der Wandler (1) ferner umfasst:

  - wenigstens einen Stromsensor (6), wobei der Stromsensor (6) so ausgebildet ist, dass er wenigstens den ersten Strom (Ipri) misst, und
  - eine Steuerung (7), die so ausgebildet ist, dass sie Schaltzeitpunkte der Schaltelemente (12) in Abhängigkeit von der vom Stromsensor (6) durchgeführten Messung des ersten Stroms (Ipri) bestimmt, um das Schalten der Schaltelemente (12) der Primärstufe (3) zu steuern, wenn der erste Strom (Ipri) im Wesentlichen null ist, wobei die Steuerung (7) so ausgebildet ist, dass sie das Schalten der Schaltelemente (12) der Primärstufe (3) zu vorgegebenen Referenzzeitpunkten steuert und Schaltzeitpunkte der Schaltelemente (12) der Sekundärstufe (4) in Abhängigkeit von der Messung des ersten Stroms so bestimmt, dass der erste Strom zu den vorgegebenen Referenzzeitpunkten im Wesentlichen null ist, wobei die Steuerung (7) dazu ausgebildet ist, die erste Spannung (Vpri) und die zweite Spannung (Vsec) nach dem Prinzip der Einfachphasenverschiebungsregelung zu steuern, wobei die Wicklungen (9, 10, 11) des Transformators (2) unterschiedliche Streuinduktivitäten (13) aufweisen.

2. Wandler (1) nach Anspruch 1, wobei die Steuerung (7) so ausgebildet ist, dass sie die Schaltzeitpunkte der Schaltelemente (12) so bestimmt, dass die Amplitude des ersten Stroms (Ipri) unter Beibehaltung einer vorgegebenen Form, vorteilhafterweise einer im Wesentlichen dreieckigen Form, verändert wird.

3. Wandler (1) nach einem der vorhergehenden Ansprüche, wobei die Steuerung (7) dazu ausgebildet ist, die Schaltzeitpunkte der Schaltelemente (12) so zu bestimmen, dass die Phasenverschiebung der zweiten Spannung (Vsec) gegenüber der ersten Spannung (Vpri) in Abhängigkeit von der Messung des ersten Stroms (Ipri) verändert wird.

4. Wandler (1) nach Anspruch 3, wobei der Absolutwert der Amplitude des ersten Stroms (Ipri) eine ansteigende Flanke aufweist, wobei der Wert der ansteigenden Flanke geändert wird, wenn die Phasenverschiebung der zweiten Spannung (Vsec) gegenüber der ersten Spannung (Vpri) durch das Schalten der Schaltelemente (12) geändert wird.

5. Wandler (1) nach einem der vorhergehenden Ansprüche, wobei die Steuerung (7) so ausgebildet ist, dass sie die Schaltzeitpunkte der Schaltelemente (12) so bestimmt, dass die Amplitude des ersten Stroms (Ipri) so verändert werden kann, dass der Absolutwert des Integrals der Amplitude des ersten Stroms zwischen zwei aufeinanderfolgenden Energieübertragungsphasen konstant ist.

6. Wandler (1) nach einem der vorhergehenden Ansprüche, wobei der Transformator (2) einen Magnetkern (8) ohne Luftspalt umfasst.

7. Wandler (1) nach einem der vorhergehenden Ansprüche, wobei die Primärstufe (3) und die Sekundärstufe (4) jeweils wenigstens ein erstes und ein zweites Schaltelement (12) in Reihe umfassen, wobei das erste Schaltelement geöffnet ist, wenn das zweite Schaltelement geschlossen ist, und umgekehrt.

8. Schienenfahrzeug mit einem Wandler (1) nach einem der vorhergehenden Ansprüche.

9. Verfahren zur Energieumwandlung, das von einem Wandler (1) für ein Schienenfahrzeug durchgeführt wird, wobei der Wandler wenigstens eine Primärwandlerstufe (3) und wenigstens eine Sekundärwandlerstufe (4) umfasst, wobei die Primärstufe (3) und die Sekundärstufe (4) jeweils Schaltelemente (12) umfassen, wobei der Wandler ferner einen Transformator (2) umfasst, der so ausgebildet ist, dass er Energie zwischen der Primärstufe (3) und der Sekundärstufe (4) überträgt, um einen ersten Strom (Ipri) unter einer ersten Spannung (Vpri), der in der Primärstufe (3) empfangen wird, in einen zweiten Strom (Isec) unter einer zweiten Spannung (Vsec) umzuwandeln, der der Sekundärstufe (4) zugeführt wird, **dadurch gekennzeichnet, dass** der Wandler (1) ferner wenigstens einen Stromsensor (6) und eine Steuerung (7) umfasst, und dass das Wandlungsverfahren umfasst:

  - einen Schritt des Messens wenigstens des ersten Stroms (Ipri) durch den Stromsensor (6) und
  - einen Schritt des Bestimmens der Schaltzeitpunkte der Schaltelemente (12) in Abhängigkeit von der Messung des ersten Stroms (Ipri), um die Schaltung der Schaltelemente (12) der Primärstufe (3) zu steuern, wenn der erste Strom (Ipri) im Wesentlichen null ist, wobei die Steuerung (7) das Schalten der Schaltelemente (12) der Primärstufe (3) zu vorgegebenen Referenzzeitpunkten steuert und Schaltzeitpunkte der Schaltelemente (12) der Sekundärstufe (4) in Abhängigkeit von der Messung des ersten Stroms so bestimmt, dass der erste Strom zu den vorgegebenen Referenzzeitpunkten im Wesentlichen null ist, wobei die Steuerung (7) die erste Spannung (Vpri) und die zweite Spannung (Vsec) nach dem Prinzip der Einfachphasenverschiebungssteuerung steuert,
wobei die Wicklungen (9, 10, 11) des Transformators (2) unterschiedliche Streuinduktivitäten (13) aufweisen.

## Claims

1. - Converter (1) for a railway vehicle comprising:

    - at least one primary conversion stage (3), and at least one secondary conversion stage (4), the primary stage (3) and the secondary stage (4) each comprising switching elements (12);
    - a transformer (2) configured to transmit energy between the primary stage (3) and the secondary stage (4) for transforming a first current (Ipri) under a first voltage (Vpri) received at the primary stage (3), into a second current (Isec) under a second voltage (Vsec) supplied to the secondary stage (4),

    **characterised in that** the converter (1) further comprises:

    - at least one current sensor (6), the current sensor (6) being configured to measure at least the first current (Ipri), and
    - a controller (7) configured to determine switching times of the switching elements (12) depending on the measurement of the first current (Ipri) performed by the current sensor (6), in such a way as to control the switching of the switching elements (12) of the primary stage (3) when the first current (Ipri) is substantially zero, the controller (7) being configured to control the switching of the switching elements (12) of the primary stage (3) at predetermined reference times and to determine switching times of the switching elements (12) of the secondary stage (4) depending on the measurement of the first current, in such a way that the first current is substantially zero at the predetermined reference times, the controller (7) being configured to control the first voltage (Vpri) and the second voltage (Vsec) according to the single phase shift control principle, the windings (9, 10, 11) of the transformer (2) having different leakage inductances (13).

2. - Converter (1) according to claim 1, wherein the controller (7) is configured to determine the switching times of the switching elements (12) so that the amplitude of the first current (Ipri) is modified while retaining a predefined shape, advantageously a substantially triangular shape.

3. - Converter (1) according to any one of the preceding claims, wherein the controller (7) is configured to determine the switching times of the switching elements (12) so as to modify the phase shift of the second voltage (Vsec) with respect to the first voltage (Vpri), depending on the measurement of the first current (Ipri).

4. - Converter (1) according to claim 3, wherein the absolute value of the amplitude of the first current (Ipri) has an increasing slope, the value of the increasing slope being modified when the phase shift of the second voltage (Vsec) with respect to the first voltage (Vpri) is modified by switching the switching elements (12).

5. - Converter (1) according to any one of the preceding claims, wherein the controller (7) is configured to determine the switching times of the switching elements (12) making it possible to modify the amplitude of the first current (Ipri) so that the absolute value of the entire amplitude of the first current between two consecutive energy transmission phases is constant.

6. - Converter (1) according to any one of the preceding claims, wherein the transformer (2) comprises a magnetic core (8) without an air gap.

7. - Converter (1) according to any one of the preceding claims, wherein the primary stage (3) and the secondary stage (4) each comprise at least one first and a second switching element (12) in series, the first switching element being open when the second switching element is closed and vice versa.

8. - Railway vehicle comprising a converter (1) according to any one of the preceding claims.

9. - Energy conversion method implemented by a converter (1) for a railway vehicle, the converter comprising at least one primary conversion stage (3), and at least one secondary conversion stage (4), the primary stage (3) and the secondary stage (4) each comprising switching elements (12), the converter further comprising a transformer (2) configured to transmit energy between the primary stage (3) and the secondary stage (4) for transforming a first current (Ipri) under a first voltage (Vpri) received at the primary stage (3), into a second current (Isec) under a second voltage (Vsec) supplied to the secondary stage (4),

    **characterised in that** the converter (1) further comprises at least one current sensor (6) and a controller (7), and **in that** the conversion method comprises:

    - a step of measuring by the current sensor (6) at least the first current (Ipri), and
- a step of determining, by the controller (7), switching times of the switching elements (12) depending on the measurement of the first current (Ipri), in such a way as to control the switching of the switching elements (12) of the primary stage (3) when the first current (Ipri) is substantially zero,

the controller (7) controlling the switching of the switching elements (12) of the primary stage (3) at predetermined reference times and determines switching times of the switching elements (12) of the secondary stage (4) depending on the measurement of the first current, in such a way that the first current is substantially zero at the predetermined reference times, the controller (7) controlling the first voltage (Vpri) and the second voltage (Vsec) according to the single phase shift control principle the windings (9, 10, 11) of the transformer (2) having different leakage inductances (13).

## FIG.1

## FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3244525 A
- US 2015229225 A

**Littérature non-brevet citée dans la description**

- **WENZHENG XU et al.** *A New Control Method for a Bi-Directional Phase-Shift-Controlled DC-DC Converter with an Extended Load Range*
- **DUDRIK JAROSLAV et al.** *Zero-Voltage and Zero-Current Switching PWM DC-DC Converter Using Controlled Secondary Rectifier With One Active Switch and Non-dissipative Turn-Off Snubber*
- Overview of Dual-Active-Bridge Isolated Bidirectional DC-DC Converter for High-Frequency-Link Power-Conversion System. *IEEE Transactions on power electronics*, August 2014, vol. 29 (8)